# EUROPEAN PATENT SPECIFICATION

(11) **EP 0 390 152 B1**
(45) Date of publication and mention of the grant of the patent: **14.09.1994**
(21) Application number: 90106037.6
(22) Date of filing: 29.03.1990
(51) Int. Cl.: B65G 47/30, A24C 5/47

(54) **Device for aligning matters different in diameter at their heads and tails in direction while locating their heads either forward or backward in this direction**
Vorrichtung zum Ausrichten von Gegenständen mit unterschiedlichem Kopf- und Schaftdurchmesser in eine Richtung, wobei deren Köpfe in dieser oder gegen diese Richtung liegen
Dispositif pour aligner dans une certaine direction des objets présentant un diamètre différent à la tête et à la base tout en plaçant leur tête soit vers l'avant soit vers l'arrière

(30) Priority: 29.03.1989 JP 75045/89
(43) Date of publication of application: 03.10.1990
(73) Proprietor: Japan Tobacco Inc., Minato-Ku Tokyo 105 (JP)
(72) Inventor: Sagawa, Takayoshi, Kanagawa-ken (JP); Tani, Shichisei, Yokohama-shi (JP); Kato, Katsuo, Kanagawa-ken (JP)
(74) Representative: Sajda, Wolf E., Dipl.-Phys.

(56) References cited:
- DE-B- 2 124 332
- DE-B- 2 500 562
- US-A- 3 517 797

## Description

The present invention relates to a device for aligning those matters or articles which are different in diameter at their heads and tails in a direction while locating their heads either forward or backward in this direction. More particularly, it relates to a device for aligning liquid-containing capsules, each of which is to fill a filter of the cigarette, in a direction while locating their heads forward in this direction.

Fig. 6 shows a liquid-containing capsule C which is an example of the articles aligned by a device of the present invention. The capsule C comprises a cylindrical body 1 having a bottom, and a cap 2 for closing an open end of the body 1. The capsule C is filled with liquid or water, for example, and housed in a filter of the cigarette. When the capsule-housed filter of the cigarette is pressed between fingers before it is lit, a part of the capsule C is broken and water in the capsule C flows to enter into fiber filaments in the filter. Components such as tar contained in the smoke can be eliminated by the water among the fiber filaments in the filter to thereby enable the cigarette to be tasted light.

These capsules C are supplied from the feeder and housed in the filters of cigarettes in the course of manufacturing cigarettes. The capsules C supplied from the feeder are fed keeping their axial direction aligned with their moving direction. However, it is not sure whether or not all of them are aligned with their caps located forward or backward in their moving direction. It is more common that some of them locate their caps forward while the others backward. This makes it necessary to use a device for aligning them in their moving direction while locating their caps forward.

One of the conventional alignment devices is intended to use an optical detector, for example, to detect the position of the cap of each capsule. Those capsules whose caps are located reverse are turned over and aligned in their moving direction. However, the optical detector is not so reliable in detecting the position of the cap of each capsule supplied and it is sometimes mistakenly operated by noises.

Another one of the conventional alignment devices as disclosed in JP-A-60-262718 has a slit at the bottom of a groove through which the capsules are conveyed. This slit has a width larger than the diameter of the body 1 of the capsule C but smaller than that of the cap 2 thereof. The body 1 of each capsule C conveyed through the groove is hung in the slit by its own weight with its cap 2 hooked by both side rims of the slit. Therefore, all of the capsules C conveyed through the groove are aligned with their caps located upward. In the case of this alignment device, however, a plurality of the capsules are conveyed through the groove under such condition that they are contacted with one another and pushed by the following ones. This causes the capsules to interfere with one another, thereby leaving some of them not hung in the groove.

The United States Patent US-A-5 517 797 discloses a machine for automatically aligning thread bobbin tubes which are wider at one end than the other. Means are provided for feeding the tubes to an alignment system. The machine comprises two conveyor tracks which are parallel to one another and rotationally driven synchronously and the distance between the tracks is shorter than the diameter of the wider end of the tube. The tubes fed centrally to the double track conveyors are supported on the conveyor tracks only by their wider ends, while hanging between the conveyor tracks and being disposed for delivery. Means are provided following the conveyor tracks to guide the aligned tubes which are directed in the same direction with their wider ends forward, into a transport case.

The present invention relates to a device for aligning rod-like matters or articles in a direction while locating their heads either forward or backward in the direction, said articles including capsules contained in the filters of cigarettes and being different in diameter at their heads and tails. The object of the present invention is to provide a device capable of aligning the articles with high reliability and at high speed.

According to the present invention, an alignment device is provided as defined in claim 1. Embodiments of the invention are given in the subclaims.

The device of the present invention has a drum preferably shaped like a thin disk. It is arranged in a plane along the flow of the articles and rotated about a horizontal shaft. A groove is formed on and along the circumference of the drum and it has a width larger than the diameter of the body of the capsule but smaller than that of the cap thereof. It also has a depth larger enough than the length of the body thereof.

The device of the present invention also has feed-in and feed-out conveyor systems. A plurality of articles, preferably capsules having caps directed forward and backward can be conveyed by the feed-in conveyor system in such a way that they are all aligned in the conveying direction. The capsules conveyed by this feed-in conveyor system are transmitted onto that portion of the circumference of the drum which is directed upward. The capsules fed on the drum are conveyed by the rotating drum under such condition that their caps are hooked by both side rims of the groove while leaving their bodies suspended in the groove.

The feed-out conveyor system has an endless belt passing through the groove on the circumference of the drum and running in same direction as the rotating direction of the drum. The capsules hung in the groove of the drum are carried by the rotating drum and as the drum is rotated, they come nearer to the belt and then transfered on to the belt. When they are about to be transfered on the belt, they contact the belt at first at the lower ends of their bodies. When the running speed of the belt is lower than the circumferential speed of the drum, therefore, the lower ends of their bodies are urged backward by the belt so that all of them can be aligned on the belt with their caps located forward. When the running speed of the belt is higher, all of them are aligned on the belt with their bodies located forward.

The capsules fed from the feed-in conveyor system onto the drum are carried on a circular line at that upper portion of the circumference of the drum which is directed upward, and then transmitted on the feed-out conveyor system with their caps located either forward or backward. The peripheral speed of the drum can be made high independently of the number of the capsules supplied to the drum. Therefore, the plural capsules hung in the groove of the drum can be so sufficiently separated from one another as to prevent them from interfere with their adjacent ones. Further, when the diameter of the drum is made large, the line on which they are carried hanging in the groove of the drum is a curve like a straight line having a large radius of curvature. They can be thus linearly carried from the feed-in conveyor system to the feed-out conveyor system without changing their direction quickly. This makes it easy to speed up the alignment device. In addition, the alignment device is simple in construction, which enables the device to be operated with high reliability and at high speed.

This invention can be more fully understood from the following detailed description when taken in conjunction with the accompanying drawings, in which:
Fig. 1 is a side view showing an example of the alignment device according to an embodiment of the present invention;
Fig. 2 is a sectional view taken along a line 2 - 2 in Fig. 1;
Fig. 3 is a sectional view taken along a line 3 - 3 in Fig. 1;
Fig. 4 is a sectional view taken along a line 4 - 4 in Fig. 1;
Fig. 5 is a sectional view taken along a line 5 - 5 in Fig. 1; and
Fig. 6 is a vertically-sectioned view showing a capsule which is an example of matters processed by the alignment device of the present invention.

An embodiment of the alignment device according to the present invention will be described with reference to the drawings. The alignment device is intended to align the above-mentioned capsules C shown in Fig. 6 in a direction. More specifically, it is intended to direct a plurality of the capsules C which are supplied with their heads directed forward and backward in the direction in such a way that their heads are directed either forward or backward in this direction.

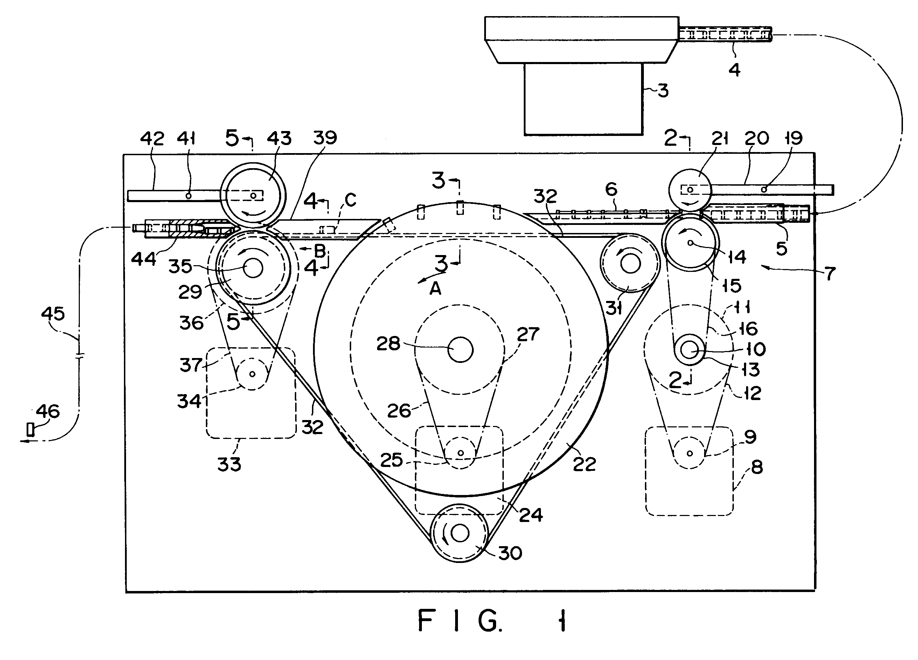

Reference numeral 3 in Fig. 1 represents a feeder from which a plurality of the capsules C are supplied. These capsules C are aligned in a direction and supplied but with their caps 2 directed forward and with their bodies 1 forward. In short, some of them are supplied with their caps 2 directed forward while the others with their bodies 1 directed forward. The capsules C supplied from the feeder 3 in this manner are conveyed through a pipe 4 and a guide tube 5. The pipe 4 and the guide tube 5 are same in inner diameter so that the capsules C can be smoothly transmitted from the pipe 4 into the guide tube 5.

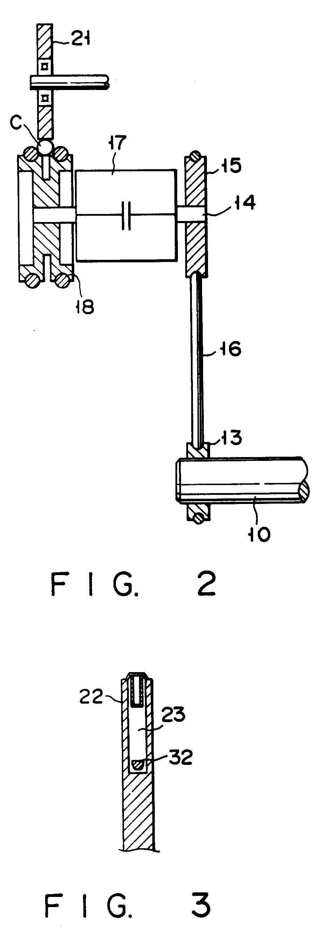

The alignment device is provided with a feed-in conveyor, which includes a supply roller system 7. The capsules C fed to the guide tube 5 are further fed to a conveying guide member 6 through the supply roller system 7. As shown in Fig. 2, the supply roller system 7 has feed and floating rollers 18 and 21. The floating roller 21 is freely rotatably supported by an arm 20, which is pivoted on rod 19 to swing in a plane perpendicular to a body of the device. Therefore, the floating roller 21 is pressed from above onto the circumference of the feed roller 18 by its own weight. The feed roller 18 is connected to a variable-speed motor 8 through an electromagnetic clutch 17, a shaft 14, a pulley 15, a belt 16, a shaft 10, a pulley 11, a belt 12 and a pulley 9. The feed roller 18 is thus driven by the motor 8 through a line of these transmitting components. The capsules C fed from the guide tube 5 are pressedly held between the feed roller 18 and the floating roller 12 and fed to the conveyor 6 by the rotating feed roller 18.

The conveying guide member 6 is shaped like a groove and the capsules C are aligned in the groove in the axial direction of the member 6 and conveyed with the forward capsules C pushed by the following ones.

The alignment device is also provided with a drum 22, which is like a disk and arranged along the vertical plane. A horizontal shaft 28 is attached to the center of the drum 22, which is driven by a variable-speed motor 24 through the shaft 28, a pulley 27, a belt 26 and a pulley 25. A groove 23 is formed along the circumference of the drum 22, as shown in Fig. 3. The groove 23 has a width larger than the outer diameter of the body 1 of the capsule C but smaller than that of the cap 2 thereof. The circumference of the drum 22 is finished rough to prevent the capsules C from sliding thereon.

The front end of the conveying guide member 6 is located adjacent to the upper portion of the circumference of the drum 22. The capsules C are therefore successively transmitted from the front end of the conveyor 6 onto the upper circumference portion of the drum 22. The capsules C thus transmitted are moved by the rotating rum 22 in such a way that they are hung in the groove 23 on the circumference of the drum 22 with their caps 2 hooked by both side rims of the groove 23 while leaving their bodies 1 suspended in the groove 23 by their weight. They are thus turned their caps 2 upside.

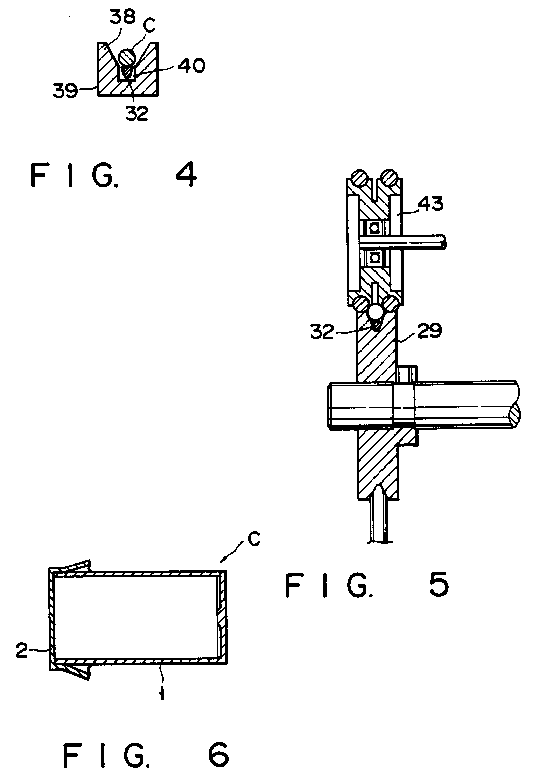

The alignment device is further provided with a feed-out conveyor. which includes a belt 32. This belt 32 is stretched like a triangle along three pulleys 29, 30 and 31, passing through the groove 23 at the upper portion of the drum 22. The underside of the belt 32 is separated from the bottom of the groove 23, and the width of the belt 32 is smaller than that of the groove 23 so that the belt 32 can be kept untouched with both sides of the groove 23, as shown in Fig. 4.

One 29 of the three rollers also serves as feed-out roller and it is driven, as seen in the case of the feed-in roller 18, by a variable-speed motor 33 through a shaft 35, a pulley 36, a belt 37 and a pulley 34. A floating roller 43, similar to the floating roller 21, is located above the feed-out roller 29. The floating roller 43 is supported by an arm 42 and freely rotatably pivoted on rod 41. The floating roller 43 is thus pressed onto the feed-out roller 29 by its own weight. The belt 32 is guided in grooves each formed on the circumference of each of the rollers 29, 30 and 31.

A feed-out guide member 39 is located in opposite to the feed-in conveyor 6 with the drum 22 interposed between them. The feed-out guide member 39 includes a feed-out groove 38 having a tapered section, and another groove 40 projected downward from the bottom of the groove 38. The belt 32 runs in the groove 40.

The running speed of the belt 32 is set lower than the circumferential speed of the drum 22 in this case. The capsules C which are hung in the groove 23 on the circumference of the drum 22 with their caps 2 hooked by both side rims of the groove 23 are carried by the rotating drum 22 in the circumferential direction of the drum and then onto the belt 32. The lower end of the body 1 of each of the capsules C is contacted at first with the upper face of the belt in this case, but because the running speed of the belt 32 is lower than the circumferential speed of the drum 22, the capsule C is fed onto the belt 32 with its cap 2 located forward. In short, all of the capsules C are successively fed onto the belt 32 by the rotating drum 22 with their caps 2 located forward.

The capsules C thus fed on the belt 32 are guided by the feed-out guide member 39 and fed into a cap-folding pipe 44 by the feed-out roller 29. The inner diameter of the pipe 44 becomes smaller at a position halfway the pipe 44 and when the capsules C are passed through the smaller-diameter portion of the pipe 44, their caps 2 are closely pressed onto their bodies 1 at their lower end portions. They are then fed, through a conveying tube 45, to another device (not shown) where a next process will be conducted. Numeral 46 denotes a sensor which detects the capsules C fed from the alignment device.

Although the running speed of the belt 32 has been made lower than the peripheral speed of the drum in the above-described case, it may be made higher. When it is made higher, the capsules C are fed onto the belt 32 with their caps 2 located backward.

It should be understood that the present invention is not limited to the above-described embodiment and that various changes and modifications can be made without departing from the scope of the present invention.

## Claims

1. A device for aligning rod-like articles having heads (2) and tails (1) different in diameter while locating the heads (2) in a forward direction, said device comprising a feed-in conveyor system (6, 7) for successively supplying said articles, a groove (23) having a width larger than the diameter of the tails (1) but smaller than that of the heads (2), and a feed-out conveyor system (29, 30, 31, 32, 39) for receiving the articles from said groove (23),
**characterized in that**
said groove (23) is provided in and along the circumference of a drum (22), said drum (22) is rotated about a horizontal shaft (28) and is located in a plane along the flow direction of said articles, the groove having a depth larger than the length of the tails (1) so that the articles transmitted onto the upper circumference portion of the drum (22) can be hung in the groove (23) on the circumference of the drum (22), keeping their heads hooked by both side rims of the groove (23) and located upward while leaving their tails suspended downward in the groove (23);
said feed-in conveyor system (6, 7) supplies said articles onto the upper circumference portion of said drum (22); and
said feed-out conveyor system (29, 30, 31, 32, 39) receives the articles hung in the groove (23) on the circumference of the drum (22) and conveys them in the same direction as the circumferential direction of the drum (22), said articles being contacted with the feed-out conveyor system at first at their tails and the speed of the articles conveyed by the feed-out conveyor system being different from the peripheral speed of the drum (22).

2. The alignment device according to claim 1, characterized in that said feed-out conveyor system has a belt (32) stretched along pulleys (29, 30, 31) and passed through the groove (23) at the upper circumference portion of the drum (22) and that the articles hung in the groove (23) are transferred onto the belt (32).

3. The alignment device according to claim 2, characterized in that the running speed of the belt (32) is set lower than the peripheral speed of the drum (22).

4. The alignment device according to any of claims 1 to 3, characterized in that said feed-in conveyor system (6, 7) includes a feed roller (18) and a floating roller (21) between which the articles are held while being fed in, and that said feed-out conveyor system (29, 30, 31, 32, 39) also includes a feed roller (29) and a floating roller (43) between which the articles are held while being fed out.

5. The alignment device according to any of claims 1 to 4, characterized in that both of said feed-in and feed-out conveyor systems (6, 7) and (29, 30, 31, 32, 39) include feed rollers (18, 29) and floating rollers (21, 43), that one (29) of the pulleys (29, 30, 31) along which the belt (32) is stretched also serves as a feed-out roller, and that the articles are fed while being held between the feed rollers (18, 29) and the floating rollers (21, 43).

## Patentansprüche

1. Vorrichtung zum Ausfluchten von stabförmigen Gegenständen, die vordere Enden (2) und hintere Enden (1) mit verschiedenen Durchmessern haben, während gleichzeitig die vorderen Enden (2) in einer Vorwärtsrichtung angeordnet werden, wobei die Vorrichtung folgendes aufweist:
- ein Eintragfördersystem (6, 7), um die Gegenstände nacheinander zuzuführen,
- eine Nut (23) mit einer Breite, die größer als der Durchmesser der hinteren Enden (1), aber kleiner als derjenige der vorderen Enden (2) ist, und
- ein Austragfördersystem (29, 30, 31, 32, 39), um die Gegenstände aus der Nut (23) aufzunehmen,
dadurch gekennzeichnet,
- daß die Nut (23) in und entlang dem Umfang einer Trommel (22) vorgesehen ist, wobei die Trommel (22) um eine horizontale Welle (28) gedreht wird und in einer Ebene längs der Durchlaufrichtung der Gegenstände positioniert ist, wobei die Nut eine Tiefe hat, die größer als die Länge der hinteren Enden (1) ist, so daß die auf den oberen Umfangsbereich der Trommel (22) überführten Gegenstände in der Nut (23) an dem Umfang der Trommel (22) aufgehängt werden können, wobei ihre vorderen Enden an beiden Seitenrändern der Nut (23) hängend und nach oben orientiert gehalten werden, während man gleichzeitig ihre hinteren Enden in der Nut (23) nach unten hängen läßt;
- daß das Eintragfördersystem (6, 7) die Gegenstände auf den oberen Umfangsbereich der Trommel (22) zuführt;
- und daß das Austragfördersystem (29, 30, 31, 32, 39) die in der Nut (23) an dem Umfang der Trommel (22) hängenden Gegenstände aufnimmt und sie in der gleichen Richtung wie die Umfangsrichtung der Trommel (22) fördert, wobei die Gegenstände zuerst mit ihren hinteren Enden mit dem Austragfördersystem in Kontakt gelangen und die Geschwindigkeit der von dem Austragfördersystem geförderten Gegenstände von der Umfangsgeschwindigkeit der Trommel (22) verschieden ist.

2. Ausfluchtungsvorrichtung nach Anspruch 1,
dadurch gekennzeichnet,
- daß das Austragfördersystem einen Gurt (32) hat, der entlang Riemenscheiben (29, 30, 31) gespannt und durch die Nut (23) an dem oberen Umfangsbereich der Trommel (22) geführt ist,
- und daß die in der Nut (23) hängenden Gegenstände auf den Gurt (32) überführt werden.

3. Ausfluchtungsvorrichtung nach Anspruch 2,
dadurch gekennzeichnet,
daß die Laufgeschwindigkeit des Gurts (32) langsamer als die Umfangsgeschwindigkeit der Trommel (23) vorgegeben ist.

4. Ausfluchtungsvorrichtung nach einem der Ansprüche 1 bis 3,
dadurch gekennzeichnet,
- daß das Eintragfördersystem (6, 7) eine Förderrolle (18) und eine lose Rolle (21) aufweist, zwischen denen die Gegenstände gehalten werden, während sie eingetragen werden,
- und daß das Austragfördersystem (29, 30, 31, 32, 39) ebenfalls eine Förderrolle (29) und eine lose Rolle (43) aufweist, zwischen denen die Gegenstände gehalten werden, während sie ausgetragen werden.

5. Ausfluchtungsvorrichtung nach einem der Ansprüche 1 bis 4,
dadurch gekennzeichnet,
- daß sowohl das Eintrag- als auch das Austragsystem (6, 7) und (29, 30, 31, 32, 39) Förderrollen (18, 29) und lose Rollen (21, 43) aufweisen,
- daß eine (29) der Rollen (29, 30, 31), entlang welcher der Gurt (32) gespannt ist, außerdem als Austragrolle dient,
- und daß die Gegenstände gefördert werden, während sie zwischen den Förderrollen (18, 29) und den losen Rollen (21, 43) gehalten werden.

## Revendications

1. Dispositif pour aligner des objets en forme de tige, qui présentent des têtes (2) et des bases (1) de diamètres différents, tout en plaçant leur tête (2) dans une direction vers l'avant, ledit dispositif comprenant un système convoyeur d'alimentation (6, 7) afin de fournir lesdits objets en succession, une gorge (23) ayant une largeur supérieure au diamètre des bases (1) mais inférieure à celui des têtes (2), et un système convoyeur de sortie (29, 30, 31, 32, 29) pour recevoir les objets depuis la gorge (23), caractérisé en ce que
- ladite gorge (23) est prévue dans et le long de la circonférence d'un tambour (22), ledit tambour (22) étant mis en rotation autour d'un arbre horizontal (28) et étant situé dans un plan le long de la direction d'écoulement desdits objets, la gorge ayant une profondeur supérieure à la longueur des bases (1), de sorte que les articles transmis sur la partie de circonférence supérieure du tambour (22) peuvent être suspendus dans la gorge (23) sur la circonférence du tambour (22), en retenant leurs têtes accrochées par les deux bordures latérales de la gorge (23) et placées en haut, tout en laissant leurs bases suspendues vers le bas dans la gorge (23) ;
- ledit système convoyeur d'alimentation (6, 7) fournissant lesdits objets sur la partie de circonférence supérieure dudit tambour (22) ; et
- ledit système convoyeur de sortie (29, 30, 31, 32, 39) recevant les objets suspendus dans la gorge (23) sur la circonférence du tambour (22) et les transportant dans la même direction que la direction circonférentielle du tambour (22), lesdits objets venant en contact avec le système convoyeur de sortie en premier lieu par leurs bases, et la vitesse des objets transportés par le système convoyeur de sortie étant différente de la vitesse périphérique du tambour (22).

2. Dispositif d'alignement selon la revendication 1, caractérisé en ce que ledit système convoyeur de sortie comporte une courroie (32) tendue le long de poulies(29, 30, 31) et passant à travers la gorge (23) à la partie de circonférence supérieure du tambour (22), et en ce que les articles suspendus dans la gorge (23) sont transférés sur la courroie (32).

3. Dispositif d'alignement selon la revendication 2, caractérisé en ce que la vitesse de circulation de la courroie (32) est fixée inférieure à la vitesse périphérique du tambour (22).

4. Dispositif d'alignement selon l'une quelconque des revendications 1 à 3, caractérisé en ce que ledit système convoyeur d'alimentation (6, 7) comprend un rouleau d'alimentation (18) et un rouleau flottant (21) entre lesquels les objets sont retenus tandis qu'ils sont alimentés, et en ce que ledit système convoyeur de sortie (29, 30, 31, 32, 39) comprend également un rouleau d'alimentation (29) et un rouleau flottant (43) entre lesquels les objets sont retenus tandis qu'ils sont sortis.

5. Dispositif d'alignement selon l'une quelconque des revendications 1 à 4, caractérisé en ce que les deux systèmes convoyeurs d'alimentation et de sortie (6, 7) et (29, 30, 31, 32, 39) comprennent des rouleaux d'alimentation (18, 29) et des rouleaux flottants (21, 43), en ce que l'une (29) des poulies (29, 30, 31) le long desquelles est tendue la courroie (32) sert également de rouleau de sortie, et en ce que les objets sont alimentés tout en étant maintenus entre les rouleaux d'alimentation (18, 29) et les rouleaux flottants (21, 43).
